# EUROPEAN PATENT APPLICATION

(11) **EP 4 130 054 A1**
(43) Date of publication of application: **08.02.2023**
(21) Application number: 21782237.8
(22) Date of filing: 30.03.2021
(51) Int. Cl.: C08F 8/00, C08F 220/28, C08K 5/17, C08L 33/14

(54) **ACRYLIC COPOLYMER, ACRYLIC COPOLYMER-CONTAINING COMPOSITION AND CROSSLINKED PRODUCT OF SAME**

(30) Priority: 31.03.2020 JP 2020063516
(71) Applicant: Osaka Soda Co., Ltd., Osaka-shi Osaka 550-0011 (JP)
(72) Inventor: OKADA, Ryo, Osaka-shi, Osaka 550-0011 (JP); MOROOKA, Yoshihiro, Osaka-shi, Osaka 550-0011 (JP); MIKI, Shota, Osaka-shi, Osaka 550-0011 (JP); KITAGAWA, Motoki, Osaka-shi, Osaka 550-0011 (JP)
(74) Representative: Vossius & Partner Patentanwälte Rechtsanwälte mbB
(86) International application number: PCT/JP2021/013513
(87) International publication number: WO 2021/200933

(57) **Abstract**

The present invention aims to provide an acrylic copolymer capable of maintaining excellent storage stability in the uncrosslinked state even after long-term exposure to high temperatures, and a crosslinked acrylic rubber product produced from the acrylic copolymer which maintains good normal-state properties and good water resistance. The present invention is based on the finding that an acrylic copolymer produced by polymerizing a liquid mixture of an alkoxyalkyl (meth)acrylate containing an alkoxyalkyl group and a crosslinkable monomer containing a carboxy group has excellent storage stability and that a crosslinked product produced from the acrylic copolymer has good normal-state properties and good water resistance.

## Description

### TECHNICAL FIELD

The present invention relates to an acrylic copolymer, an acrylic copolymer-containing composition, and a crosslinked product thereof. The present invention more particularly relates to an acrylic copolymer having excellent storage stability even after long-term exposure to high temperatures, and a crosslinked product produced from the acrylic copolymer which has good normal-state properties and good water resistance.

### BACKGROUND ART

It is generally known that an acrylic copolymer may be produced by copolymerizing a (meth)acrylic acid ester, e.g., by emulsion polymerization and adding the product to a coagulant aqueous solution to obtain a water-containing crumb, followed by drying the crumb at a high temperature.

However, in the production of an acrylic copolymer, the coagulation and drying steps can cause thermal degradation as they require the water-containing crumb to be exposed to high temperatures for a long period of time, so that a thermal history is imparted to the rubber.
Hence, when the acrylic copolymer after long-term storage is processed, a problem such as poor Mooney scorch or scorching may occur. Thus, improving storage stability of the acrylic copolymer has become an issue.

In response to this situation, it has been proposed to improve storage stability of an acrylic copolymer by bringing an emulsion polymerization solution obtained by emulsion-polymerizing a liquid monomer mixture mainly containing a (meth)acrylic acid ester into contact with a monovalent metal sulfate for coagulation and subjecting the resulting water-containing crumb to washing and drying steps (Patent Literature 1).

However, Patent Literature 1 discloses only the results of the accelerated storage stability test under conditions in which the acrylic copolymer is stored at a temperature of 40°C and a humidity of 80% for three days. Thus, it is desirable to provide an acrylic copolymer having excellent storage stability under higher temperature conditions.

### CITATION LIST

### PATENT LITERATURE

Patent Literature 1: JP 2019-189839 A

### SUMMARY OF INVENTION

### TECHNICAL PROBLEM

An object of the present invention is to provide an acrylic copolymer capable of maintaining excellent storage stability in the uncrosslinked state even after long-term exposure to high temperatures, and a crosslinked product produced from the acrylic copolymer which maintains good normal-state properties and good water resistance.

### SOLUTION TO PROBLEM

In order to achieve the above object, the present inventors performed a variety of investigations to find that an acrylic copolymer produced by polymerizing a liquid mixture of an alkoxyalkyl (meth)acrylate containing an alkoxyalkyl group and a crosslinkable monomer containing a carboxy group has excellent storage stability, and that a crosslinked product produced from the acrylic copolymer has good normal-state properties and good water resistance. This finding has led to the completion of the present invention. Here, the term "alkoxyalkyl (meth)acrylate" means "alkoxyalkyl acrylate or alkoxyalkyl methacrylate", and the term "alkyl (meth)acrylate" means "alkyl acrylate or alkyl methacrylate". Herein, the same applies to those similar to these expressions. Moreover, the crosslinked product may also be referred to as "crosslinked acrylic rubber product".

Exemplary embodiments of the present invention are as follows.
Embodiment 1. An acrylic copolymer, containing 5% by mass to 70% by mass of at least one structural unit derived from an alkoxyalkyl (meth)acrylate containing a C2-C8 alkoxyalkyl group, the acrylic copolymer satisfying the following conditions (1) and (2):
   (1) the acrylic copolymer has a residual divalent metal content within a range from 50 ppm by mass to 500 ppm by mass; and
   (2) the acrylic copolymer contains 0.5% by mass to 5% by mass of at least one structural unit derived from a crosslinkable monomer containing a carboxy group.
Embodiment 2. The acrylic copolymer according to Embodiment 1, containing a structural unit derived from an alkyl (meth)acrylate containing a C1-C8 alkyl group.
Embodiment 3. The acrylic copolymer according to Embodiment 1 or 2, wherein the crosslinkable monomer containing a carboxy group includes an ethylenically unsaturated dicarboxylic acid monoester.
Embodiment 4. An acrylic copolymer-containing composition, containing: the acrylic copolymer according to any one of Embodiments 1 to 3; and a crosslinking agent.
Embodiment 5. A crosslinked acrylic rubber product, produced from the acrylic copolymer composition according to Embodiment 4.

### ADVANTAGEOUS EFFECTS OF INVENTION

The acrylic copolymer of the present invention, even in the uncrosslinked state, has excellent long-term storage stability at high temperatures, and a crosslinked rubber product produced from the acrylic copolymer of the present invention maintains good normal-state properties and good water resistance.

### DESCRIPTION OF EMBODIMENTS

### <Acrylic copolymer>

The acrylic copolymer of the present invention contains 5% by mass to 70% by mass of at least one structural unit derived from an alkoxyalkyl (meth)acrylate containing a C2-C8 alkoxyalkyl group and satisfies the following conditions (1) and (2):
(1) the acrylic copolymer has a residual divalent metal content within a range from 50 ppm by mass to 500 ppm by mass; and
(2) the acrylic copolymer contains 0.5% by mass to 5% by mass of at least one structural unit derived from a crosslinkable monomer containing a carboxy group. Thus, the acrylic copolymer has excellent storage stability and a crosslinked product produced from the acrylic copolymer of the present invention maintains good normal-state properties and good water resistance and particularly provides good water resistance.

The reason why the acrylic copolymer provides the aforementioned advantageous effect is believed to be as follows.

Although the crosslinking group portion of the acrylic copolymer affects the storage stability (scorching properties), the crosslinking carboxy group may coordinate (form complex ions) with a divalent metal (e.g., magnesium (Mg)), thereby inhibiting scorch associated with degradation. In contrast, for example, the monovalent metal sodium (Na) cannot coordinate with the carboxy group and therefore cannot inhibit scorch. Thus, since an appropriate amount of a divalent metal capable of coordinating with the crosslinking group is present in the acrylic copolymer, the acrylic copolymer, even in the uncrosslinked state, has excellent long-term storage stability at high temperatures, and a crosslinked rubber product produced from the acrylic copolymer of the present invention maintains good normal-state properties and good water resistance.

The acrylic copolymer of the present invention can be produced by polymerizing a liquid mixture of an alkoxyalkyl (meth)acrylate containing a C2-C8 alkoxyalkyl group and a crosslinkable monomer containing a carboxy group. The acrylic copolymer may further contain, as a structural unit, a monomer that includes an alkyl (meth)acrylate containing a C1-C8 alkyl group.

Examples of the alkoxyalkyl (meth)acrylate containing a C2-C8 alkoxyalkyl group include methoxymethyl acrylate, methoxyethyl acrylate, ethoxymethyl acrylate, 2-ethoxyethyl acrylate, 2-propoxyethyl acrylate, 2-butoxyethyl acrylate, 2-methoxypropyl acrylate, 2-ethoxypropyl acrylate, 3-methoxypropyl acrylate, 3-ethoxypropyl acrylate, 4-methoxybutyl acrylate, 4-ethoxybutyl acrylate, ethoxyethyl methacrylate, and methoxyethyl methacrylate, as well as methoxy polyethylene glycol methacrylate having a polyether structure in a side chain. These may be used alone, or two or more alkoxyalkyl (meth)acrylates may be used in combination. Preferred is a structural unit derived from methoxyethyl acrylate or methoxyethyl methacrylate.

The number of carbon atoms of the alkoxyalkyl group of the alkoxyalkyl (meth)acrylate is 2 to 8, preferably 6 or smaller, more preferably 4 or smaller, still more preferably 3 or smaller. When the number of carbon atoms is within the range indicated above, the advantageous effect tends to be more suitably achieved.

The amount of structural units derived from alkoxyalkyl (meth)acrylates containing an alkoxyalkyl group in the acrylic copolymer of the present invention is 5% by mass to 70% by mass, preferably 5% by mass to 55% by mass, more preferably 5 to 45% by weight based on the total structural units of the acrylic copolymer. From the standpoints of the normal-state properties and water resistance of the crosslinked product, it is preferred that the amount of these structural units is within the range indicated above.

Examples of the crosslinkable monomer containing a carboxy group include: ethylenically unsaturated monocarboxylic acids such as methacrylic acid, acrylic acid, crotonic acid, 2-pentenoic acid, and cinnamic acid; ethylenically unsaturated dicarboxylic acids such as fumaric acid, maleic acid, and itaconic acid; and ethylenically unsaturated dicarboxylic acid monoesters such as monoalkyl fumarates, e.g., monomethyl fumarate, monoethyl fumarate, monopropyl fumarate, monobutyl fumarate, monohexyl fumarate, and monooctyl fumarate, monoalkyl maleates, e.g., monomethyl maleate, monoethyl maleate, monopropyl maleate, monobutyl maleate, monopentyl maleate, and monodecyl maleate, and monoalkyl itaconates, e.g., monomethyl itaconate, monoethyl itaconate, monopropyl itaconate, and monobutyl itaconate. These may be used alone or in combinations of two or more thereof. The crosslinkable monomer containing a carboxy group is preferably an ethylenically unsaturated dicarboxylic acid monoester, more preferably a monoalkyl fumarate, most preferably a monoalkyl fumarate in which the alkyl group has 1 to 4 carbon atoms.

The amount of structural units derived from crosslinkable monomers containing a carboxy group in the acrylic copolymer of the present invention is 0.5% by mass to 5% by mass, preferably 0.5% by mass to 3.5% by mass, more preferably 0.5% by mass to 2% by mass based on the total structural units. From the standpoints of physical properties such as strength and compression set and processability, it is preferred that the amount of structural units derived from crosslinkable monomers containing a carboxy group is within the range indicated above.

Examples of the alkyl (meth)acrylate containing a C1-C8 alkyl group include methyl acrylate, ethyl acrylate, n-propyl acrylate, isopropyl acrylate, n-butyl acrylate, isobutyl acrylate, n-pentyl acrylate, n-hexyl acrylate, n-heptyl acrylate, n-octyl acrylate, 2-ethylhexyl acrylate, cyclohexyl acrylate, ethyl methacrylate, n-butyl methacrylate, ethoxyethyl methacrylate, methoxyethyl methacrylate, isobutyl methacrylate, n-pentyl methacrylate, n-hexyl methacrylate, n-octyl methacrylate, 2-ethylhexyl methacrylate, n-decyl methacrylate, isodecyl methacrylate, n-dodecyl methacrylate, n-lauryl methacrylate, n-octadecyl methacrylate, n-methyl methacrylate, n-ethyl methacrylate, n-butyl methacrylate, n-hexyl methacrylate, and isodecyl methacrylate. Preferred among these are ethyl acrylate, n-butyl acrylate, n-methyl methacrylate, and n-ethyl methacrylate. These may be used alone or in combinations of two or more thereof. Preferred is a structural unit derived from ethyl acrylate or n-butyl acrylate.

The number of carbon atoms of the alkyl group of the alkyl (meth)acrylate is 1 to 8, preferably 2 or more, but preferably 6 or less, more preferably 4 or less. When the number of carbon atoms is within the range indicated above, the advantageous effect tends to be more suitably achieved.

The amount of structural units derived from alkyl (meth)acrylates containing a C1-C8 alkyl group in the acrylic copolymer of the present invention is 20% by mass to 94.5% by mass, preferably 35% by mass to 94.5% by mass, more preferably 50% by mass to 94.5% by mass based on the total structural units of the acrylic copolymer. From the standpoint of the balance of cold resistance and oil resistance, it is preferred that the amount of these structural units is within the range indicated above.

The residual divalent metal (preferably magnesium) content of the acrylic copolymer of the present invention is derived from the materials used in the steps of the production of the acrylic copolymer, and is 50 ppm by mass to 500 ppm by mass, preferably 75 ppm by mass to 450 ppm by mass, more preferably 100 ppm by mass to 400 ppm by mass based on the acrylic copolymer. The lower limit thereof is particularly preferably 125 ppm by mass or more, most preferably 150 ppm by mass or more, even most preferably 200 ppm by mass or more. When the residual divalent metal content is beyond the range indicated above, deterioration of Mooney scorch, reduction in water resistance, or other problems may occur, failing to achieve the desired storage stability effect of the present invention. The residual divalent metal content in the acrylic copolymer can be measured by ICP optical emission spectrometry. Here, when a plurality of divalent metals are present, the residual divalent metal content means the total amount of residual divalent metals.

Examples of the divalent metal include magnesium, calcium, barium, and iron. These may be used alone or in combinations of two or more thereof. Preferred among these is magnesium or calcium, with magnesium being more preferred.

The residual divalent metal (preferably magnesium) content of the acrylic copolymer may be adjusted to fall within the above range by, for example, a method in which an acrylic copolymer is emulsion-polymerized using an aqueous solution containing a divalent metal (preferably magnesium) at an appropriate concentration as a coagulant for coagulating the resulting emulsion polymerization solution. Adjusting the concentration of the divalent metal-containing aqueous solution used and the intensity of washing the coagulated copolymer can allow an acrylic copolymer to have a desired residual divalent metal content.

Moreover, even when the same coagulant is used and the same water-washing operation is performed, the residual divalent metal content may slightly vary because the viscosity and molecular weight of the acrylic copolymer depend on the composition thereof. However, those skilled in the art could make an appropriate adjustment without undue burden.

The acrylic copolymer of the present invention may further contain, as a structural unit of the acrylic copolymer, an additional copolymerizable monomer other than the above monomers without departing from the spirit of the present invention. Examples of the additional monomer include ethylenically unsaturated nitrile monomers, (meth)acrylamide monomers, aromatic vinyl monomers, conjugated diene monomers, non-conjugated diene monomers, and other olefinic monomers. These may be used alone or in combinations of two or more thereof.

Examples of ethylenically unsaturated nitrile monomers include acrylonitrile, methacrylonitrile, α-methoxyacrylonitrile, and vinylidene cyanide. These may be used alone or in combinations of two or more thereof.

Examples of (meth)acrylamide monomers include acrylamide, methacrylamide, diacetoneacrylamide, diacetonemethacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propyoxymethylacrylamide, N-propyoxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamamide, maleic diamide, itaconic diamide, methyl maleamide, methyl itaconamide, maleic imide, and itaconic imide. These may be used alone or in combinations of two or more thereof.

Examples of aromatic vinyl monomers include styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combinations of two or more thereof.

Examples of conjugated diene monomers include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more thereof.

Examples of non-conjugated diene monomers include 1,4-pentadiene, 1,4-hexadiene, ethylidenenorbornene, norbornadiene, and dicyclopentadiene. These may be used alone or in combinations of two or more thereof.

Examples of other olefinic monomers include esters such as dicyclopentadienyl acrylate, dicyclopentadienyl methacrylate, dicyclopentadienylethyl acrylate, and dicyclopentadienylethyl methacrylate, ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combinations of two or more thereof.

The combined amount of structural units derived from alkoxyalkyl (meth)acrylates containing a C2-C8 alkoxyalkyl group, structural units derived from crosslinkable monomers containing a carboxy group, and structural units derived from alkyl (meth)acrylates containing a C1-C8 alkyl group in the acrylic copolymer of the present invention is preferably 60% by mass or more, more preferably 70% by mass or more, still more preferably 80% by mass or more, particularly preferably 90% by mass or more, most preferably 95% by mass or more, and may be 100% by mass based on the total structural units. When the combined amount is within the range indicated above, the advantageous effect tends to be more suitably achieved.

The amounts of the structural units in the acrylic copolymer of the present invention can be determined from the nuclear magnetic spectrum of the produced polymer.

### <Method for producing acrylic copolymer>

The acrylic copolymer used in the present invention can be produced by polymerizing various monomers. Each of the monomers used may be a commercial product without any limitations.

The mode of the polymerization reaction may be emulsion polymerization, suspension polymerization, bulk polymerization, or solution polymerization, but from standpoints such as easiness in controlling the polymerization reaction, emulsion polymerization under normal pressure is preferred which is generally used in conventionally known acrylic copolymer production.

In the case of polymerization by emulsion polymerization, a usual method may be used, and conventional and common polymerization initiator, emulsifier, chain transfer agent, polymerization terminator, and other agents may be used.

Any emulsifier may be used in the present invention, including nonionic emulsifiers and anionic emulsifiers commonly used in emulsion polymerization. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkylbenzene sulfonates, alkyl sulfates, polyoxyethylene alkyl ether sulfates, polyoxyalkylene alkyl ether phosphates and salts thereof, and fatty acid salts. One or two or more of these emulsifiers may be used. Typical examples of anionic emulsifiers include sodium dodecyl sulfate, sodium dodecylbenzene sulfonate, and triethanolamine dodecyl sulfate.

The amount of emulsifiers used in the present invention may be an amount commonly used in emulsion polymerization. Specifically, the amount per 100 parts by mass of the monomers constituting the acrylic copolymer is in the range of 0.01 parts by mass to 10 parts by mass, preferably 0.03 parts by mass to 7 parts by mass, still more preferably 0.05 parts by mass to 5 parts by mass. When a reactive surfactant is used as a monomer component, it is not always necessary to add an emulsifier.

Any polymerization initiator may be used in the present invention, including polymerization initiators commonly used in emulsion polymerization. Specific examples thereof include inorganic polymerization initiators typified by persulfates such as potassium persulfate, sodium persulfate, and ammonium persulfate; organic peroxide polymerization initiators such as 2,2-di(4,4-di-(t-butylperoxy)cyclohexyl)propane, 1-di-(t-hexylperoxy)cyclohexane, 1,1-di-(t-butylperoxy)cyclohexane, n-butyl 4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl)peroxide, dilauroyl peroxide, disuccinic acid peroxide, dibenzoyl peroxide, di(3-methylbenzoyl)peroxide, benzoyl(3-methylbenzoyl)peroxide, diisopropylperoxy dicarbonate, di-n-propylperoxy dicarbonate, di(4-t-butylcyclohexyl)peroxy dicarbonate, di(2-ethylhexyl)peroxy dicarbonate, di-sec-butylperoxy dicarbonate, cumylperoxy neodecanoate, 1,1,3,3-tetramethylbutylperoxy neodecanoate, t-hexylperoxy neodecanoate, t-butylperoxy neodecanoate, t-hexyl peroxypivalate, t-butyl peroxypivalate, 2,5-dimethyl-2,5-di(2-ethylhexanoylperoxy)hexane, 1,1,3,3-tetramethylbutyl peroxy-2-ethylhexanate, t-hexyl peroxy-2-ethylhexanate, t-butyl peroxy-2-ethylhexanate, t-butyl peroxylaurate, t-butyl peroxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy)hexane, t-butyl peroxyacetate, t-hexyl peroxybenzoate, t-butyl peroxybenzoate, and 2,5-dimethyl-2,5-di(t-butylperoxy)hexane; hydroperoxides; and azo initiators such as azobisisobutyronitrile, 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropaneamide, 2-2'-azobis{2-[1-(2-hydroxyethyl)-2-imidazolin-2-yl]propane}, 2-2'-azobis(1-imino-1-pyrrolidino-2-methylpropane), and 2-2'-azobis{2-methyl-N-[1,1-bis(hydroxymethyl)-2-hydroxyethyl]propaneamide}. These polymerization initiators may be used alone or in combinations of two or more thereof.

The amount of polymerization initiators used in the present invention may be an amount commonly used in emulsion polymerization. Specifically, the amount per 100 parts by mass of the monomers constituting the acrylic copolymer is in the range of 0.01 parts by mass to 5 parts by mass, preferably 0.015 parts by mass to 4 parts by mass, still more preferably 0.02 parts by mass to 3 parts by mass.

Moreover, organic peroxides and inorganic peroxides as polymerization initiators may be combined with reductants and used as redox polymerization initiators. Non-limiting examples of reductants that may be used in combination include compounds containing reduced metal ions, such as ferrous sulfate and cuprous naphthenate; methane compounds such as sodium methanesulfonate, amine compounds such as dimethylaniline, ascorbic acid and salts thereof, and reducing inorganic salts such as alkali metal salts of sulfurous acid or thiosulfuric acid. These reductants may be used alone or in combinations of two or more thereof. The amount of reductants used per 100 parts by mass of the monomers constituting the acrylic copolymer is preferably 0.0003 to 10.0 parts by mass.

A chain transfer agent may be used as needed. Specific examples of the chain transfer agent include n-hexyl mercaptan, n-octyl mercaptan, t-octyl mercaptan, n-dodecyl mercaptan, t-dodecyl mercaptan, n-stearyl mercaptan, and other alkyl mercaptans, 2,4-diphenyl-4-methyl-1-pentene, 2,4-diphenyl-4-methyl-2-pentene, dimethylxanthogen disulfide, diisopropylxanthogen disulfide, and other xanthogen compounds, terpinolene, tetramethylthiuram disulfide, tetraethylthiuram disulfide, tetramethylthiuram monosulfide, and other thiuram compounds, 2,6-di-t-butyl-4-methylphenol, styrenated phenol, and other phenolic compounds, allyl alcohol and other allyl compounds, dichloromethane, dibromomethane, carbon tetrabromide, and other halogenated hydrocarbon compounds, α-benzyloxystyrene, α-benzyloxyacrylonitrile, α-benzyloxyacrylamide, and other vinyl ethers, triphenylethane, pentaphenylethane, acrolein, methacrolein, thioglycolic acid, thiomalic acid, and 2-ethylhexyl thioglycolate. One or two or more of these chain transfer agents may be used. Although the amount of these chain transfer agents is not limited, the amount per 100 parts by mass of the monomers constituting the acrylic copolymer is usually 0 parts by mass to 5 parts by mass.

Examples of polymerization terminators include hydroxylamine, hydroxylamine sulfate, diethylhydroxyamine, hydroxyamine sulfonic acid and alkali metal salts thereof, sodium dimethyldithiocarbamate, and quinone compounds such as hydroquinone. Although the amount of polymerization terminators used is not limited, the amount per 100 parts by mass of the monomers constituting the acrylic copolymer is usually 0 parts by mass to 2 parts by mass.

Furthermore, the pH of the polymer produced as described above may be adjusted using a base as a pH adjuster, if needed. Specific examples of the base include sodium hydroxide, potassium hydroxide, calcium hydroxide, sodium hydrogen carbonate, ammonia, inorganic ammonium compounds, and organic amine compounds. The pH is in the range of 1 to 11, preferably of 1.5 to 10.5, more preferably of 2 to 10.

In addition to the above components, polymerization auxiliary materials such as a particle size modifier, a chelating agent, and an oxygen scavenger may be used as needed.

Emulsion polymerization may be performed batchwise, semi-batchwise, or continuously. The polymerization time and the polymerization temperature are not limited and can be selected appropriately according to the type of polymerization initiator used or other factors. Generally, the polymerization temperature is 10°C to 100°C, and the polymerization time is 0.5 to 100 hours.

The polymer produced as described above may be collected by any method, including common methods. Such an exemplary method includes continuously or batchwise feeding the polymerization solution to a coagulant-containing aqueous solution. This operation provides a water-containing crumb. In this operation, the temperature of the coagulant-containing aqueous solution can be affected by the type and amount of the monomers used or the coagulation conditions including the shear force generated by stirring or other means, and therefore cannot be uniformly specified, but the temperature is generally 50°C to 100°C, preferably in the range of 60°C to 100°C.

The coagulant-containing aqueous solution is preferably, but not limited to, a divalent metal-containing aqueous solution. Examples of the divalent metal-containing aqueous solution include magnesium-containing aqueous solutions such as a magnesium sulfate aqueous solution, a magnesium chloride aqueous solution, and a magnesium nitrate aqueous solution; calcium-containing aqueous solutions such as a calcium sulfate aqueous solution, a calcium chloride aqueous solution, and a calcium nitrate aqueous solution; barium-containing aqueous solutions such as barium chloride aqueous solution and barium nitrate aqueous solution; and iron-containing aqueous solutions such as an iron sulfate aqueous solution, an iron chloride aqueous solution, and an iron nitrate aqueous solution. These may be used alone or in combinations of two or more thereof. Preferred among these are magnesium-containing aqueous solutions, with a magnesium sulfate aqueous solution being more preferred. In this case, an acrylic copolymer containing a divalent metal (preferably magnesium) can be suitably produced.

Further, an antioxidant may be added during the coagulation process described above. Specific examples of the antioxidant include phenolic antioxidants, amine antioxidants, phosphanol antioxidants, and hindered amine antioxidants.

Furthermore, the pH of the water-containing crumb obtained as described above may be adjusted using a base as a pH adjuster, if needed. Specific examples of the base include sodium hydroxide, potassium hydroxide, calcium hydroxide, sodium hydrogen carbonate, ammonia, inorganic ammonium compounds, and organic amine compounds. The pH is in the range of 1 to 11, preferably of 2 to 10, more preferably of 4 to 8.

The water-containing crumb obtained as described above is preferably subjected to washing with water to moderately remove the coagulant. If washing with water is not performed at all or is insufficient, ion residues derived from the coagulant may precipitate during the forming step, and an acrylic copolymer having a desired residual divalent metal content may not be produced.

The water-containing crumb after water washing may be dehydrated and dried to obtain an acrylic copolymer. Although the drying may be performed by any method, it is generally performed using a flash dryer, a fluid dryer, or other dryer. Moreover, the drying step may be preceded by a dehydration step using a centrifuge or other device.

From the standpoint of processability, the molecular weight range of the thus produced acrylic copolymer of the present invention is preferably 10 to 100, more preferably 15 to 90, still more preferably 20 to 80, as expressed by the Mooney viscosity (ML1+4) at 100°C determined in a Mooney scorch test as set forth in JIS K 6300.

### <Acrylic copolymer-containing composition>

The acrylic copolymer-containing composition of the present invention can be obtained by containing the above acrylic copolymer and at least a crosslinking agent.

Examples of the crosslinking agent include conventional crosslinking agents usually used in crosslinking of rubber, such as polyvalent amine compounds, polyvalent epoxy compounds, polyvalent isocyanate compounds, aziridine compounds, sulfur compounds, basic metal oxides, and organic metal halides. Polyvalent amine compounds are suitable among these.

Examples of polyvalent amine compounds include aliphatic polyvalent amine compounds such as hexamethylenediamine, hexamethylenediamine carbamate, and N,N'-dicinnamylidene-1,6-hexanediamine; and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide.

Examples of polyvalent epoxy compounds include phenol novolac epoxy compounds, cresol novolac epoxy compounds, cresol epoxy compounds, bisphenol A epoxy compounds, bisphenol F epoxy compounds, brominated bisphenol A epoxy compounds, brominated bisphenol F epoxy compounds, hydrogenated bisphenol A epoxy compounds, and other glycidyl ether epoxy compounds, alicyclic epoxy compounds, glycidyl ester epoxy compounds, glycidyl amine epoxy compounds, isocyanurate epoxy compounds, and other polyvalent epoxy compounds.

Examples of polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of sulfur compounds include sulfur, 4,4'-dithiomorpholine, tetramethylthiuram disulfide, and tetraethylthiuram disulfide.

Examples of basic metal oxides include zinc oxide, lead oxide, calcium oxide, and magnesium oxide.

Examples of organic metal halides include dicyclopentadienyl metal dihalides, and examples of the metal include titanium and zirconium.

These crosslinking agents may be used alone or in combinations of two or more thereof. The amount of crosslinking agents per 100 parts by mass of the acrylic copolymer of the present invention is 0.05 parts by mass to 20 parts by mass, preferably 0.1 parts by mass to 10 parts by mass.

Moreover, the acrylic copolymer-containing composition of the present invention may contain any other additives usually used in the art. Examples of such additives include lubricants, antioxidants, photostabilizers, fillers, reinforcing agents, plasticizers, processing aids, pigments, colorants, crosslinking accelerators, crosslinking aids, crosslinking retardants, antistatic agents, and foaming agents.

Furthermore, rubbers, resins, and the like usually used in the art may be blended without departing from the spirit of the present invention. Examples of usual rubbers that may be used in the present invention include polybutadiene rubbers, styrene-butadiene rubbers, polyisoprene rubbers, natural rubbers, acrylonitrile-butadiene rubbers, acrylonitrile-butadiene-isoprene rubbers, ethylene-propylene-diene rubbers, and epichlorohydrin rubbers, and examples of those resins include polymethyl methacrylate (PMMA) resins, polystyrene (PS) resins, polyurethane (PUR) resins, polyvinyl chloride (PVC) resins, ethylene/vinyl acetate (EVA) resins, styrene/acrylonitrile (AS) resins, and polyethylene (PE) resins.

The total amount of the above-mentioned rubbers and/or resins per 100 parts by mass of the acrylic copolymer of the present invention is 50 parts by mass or less, preferably 10 parts by mass or less, more preferably 1 part by mass or less.

### <Crosslinked acrylic rubber product>

The crosslinked acrylic rubber product of the present invention can be produced by crosslinking the above acrylic copolymer-containing composition.

To obtain the crosslinked acrylic rubber product of the present invention, the acrylic copolymer-containing composition may be compounded using any means conventionally used in the field of rubber processing, such as an open roll mill, a Banbury mixer, or any of various kneaders. The compounding may be performed by usual procedures employed in the field of rubber processing. For example, the following procedure may be used: only a rubber is first kneaded, then compounding agents other than a crosslinking agent and a crosslinking accelerator are introduced to prepare an A-kneaded compound, and thereafter B-kneading is performed by introducing the crosslinking agent and the crosslinking accelerator.

The crosslinked acrylic rubber product of the present invention can be produced by heating the acrylic copolymer-containing composition to usually 100°C to 250°C. Although the crosslinking time depends on the temperature, it is usually performed for 0.5 to 300 minutes. As for crosslinking and forming, crosslinking and forming may be performed in an integrated manner, or a previously formed product of the acrylic copolymer-containing composition may be reheated to produce a crosslinked acrylic rubber product, or a crosslinked rubber product obtained by previously heating the composition may be processed for forming. The crosslinking and forming may be performed specifically by any method, including compression or injection molding using a mold, and heating using a steam can, an air bath, infrared rays, or microwaves.

The thus obtained acrylic copolymer-containing composition of the present invention has excellent roll processability during processing, and the crosslinked acrylic rubber product of the present invention has excellent normal-state properties and excellent heat resistance under long-term high temperature conditions.

Thus, by taking advantage of the above-mentioned characteristics, the crosslinked rubber product of the present invention can be suitably used in O-rings, packings, diaphragms, oil seals, shaft seals, bearing seals, mechanical seals, well head seals, seals for electrical and electronic equipment, seals for pneumatic equipment, and various types of gaskets such as cylinder head gaskets which are mounted at the joint between a cylinder block and a cylinder head, rocker cover gaskets which are mounted at the joint between a rocker cover and a cylinder head, oil pan gaskets which are mounted at the joint between an oil pan and a cylinder block or transmission case, gaskets for fuel cell separators which are mounted between a pair of housings sandwiching a unit cell provided with an anode, an electrolyte plate, and a cathode, and gaskets for top covers of hard disk drives.

Moreover, the crosslinked acrylic rubber product of the present invention can be suitably used as extruded products or molded crosslinked products used in automotive applications, for example, in various hoses, including fuel oil hoses around fuel tanks such as fuel hoses, filler neck hoses, vent hoses, vapor hoses, and oil hoses; air hoses such as turbo air hoses and emission control hoses; radiator hoses, heater hoses, brake hoses, and air conditioner hoses.

### EXAMPLES

The present invention is specifically described with reference to examples and comparative examples. However, the present invention is not limited thereto.

In the examples and comparative examples, acrylic copolymers were produced, and acrylic copolymer-containing compositions each containing one of the acrylic copolymers and a crosslinking agent and crosslinked acrylic rubber products produced by crosslinking the acrylic copolymer-containing compositions were evaluated for physical properties. Here, the physical properties were evaluated as described below.

### <Mooney viscosity (ML1+4, 100°C)>

The Mooney viscosity (ML1+4) of each acrylic copolymer was measured at a measurement temperature of 100°C using Mooney Viscometer AM-3 (Toyo Seiki Seisaku-sho, Ltd.) according to the Mooney viscosity test of the physical testing methods for uncrosslinked rubber of JIS K6300.

### <Residual magnesium content>

In the following examples, since no divalent metals other than magnesium were present, only magnesium was analyzed as a divalent metal. Specifically, the residual magnesium content in each acrylic copolymer was analyzed by ICP optical emission spectrometry.

### <Mooney scorch test>

The Mooney scorch time and Vm (M) of each acrylic copolymer-containing composition were measured at 125°C using Mooney Viscometer AM-3 (Toyo Seiki Seisaku-sho, Ltd.) according to JIS K 6300. The period of time during which the Mooney viscosity increases from Vm (M) by 5 M is denoted by t5, and a greater t5 value means that a longer time is required for vulcanization and the acrylic copolymer-containing composition can be regarded as having excellent storage stability with a well-controlled vulcanization accelerating effect. Moreover, a smaller Vm (M) value means that the initial vulcanization of the acrylic copolymer-containing composition is low and the composition can be regarded as having excellent storage stability. If the t5 value is 3.2 minutes or longer and the Vm (M) value is 85 or smaller, the acrylic copolymer is regarded as maintaining excellent storage stability in the uncrosslinked state even after long-term exposure to high temperatures.

### <Normal-state property test>

Each acrylic copolymer-containing composition was pressed at 180°C for 10 minutes and then heated in an air oven at 180°C for three hours to obtain a sheet-shaped crosslinked acrylic rubber product. The crosslinked acrylic rubber product was punched into a type 3 dumbbell shape to prepare a specimen. The specimen was evaluated using AGS-5KNY (Shimadzu Corporation) by a tensile test as set forth in JIS K6251 and a hardness test as set forth in JIS K6253.

<Water resistance test>

A water resistance test was performed in conformity with the method described in JIS K6258. A sheet-shaped crosslinked acrylic rubber product prepared in the same manner as in the above normal-state property test was cut into a 1 cm square piece having a thickness of 2.5 ± 0.3 mm to prepare a specimen. Next, the specimen was put in a 250 cc glass test tube and 100 cc of distilled water was put into the tube so that the specimen was completely filled therewith, followed by heating at 90°C for 72 hours. After the heating, the specimen was taken from the glass test tube and distilled water was wiped off. Then, the volume was measured using a specific gravity meter and the rate of change in volume ΔV (%) before and after heating was calculated. A smaller rate of change in volume ΔV (%) indicates better water resistance.

### [Production Example 1]

### (Production of acrylic copolymer A)

A polymerization reactor equipped with a thermometer, a stirrer, a nitrogen introduction tube, and a decompressor was charged with 200 parts by mass of water, 1.7 parts by mass of a polyoxyalkylene alkyl ether phosphate, and the following monomers: 15.0 parts by mass of ethyl acrylate, 53.6 parts by mass of n-butyl acrylate, 30.0 parts by mass of 2-methoxyethyl acrylate, and 1.4 parts by mass of monoethyl fumarate. Oxygen was thoroughly removed by repetitive deaeration and nitrogen replacement under reduced pressure. Then, 0.1 parts by mass of sodium ascorbate and 0.1 parts by mass of potassium persulfate were added and an emulsion polymerization reaction was started at normal pressure and temperature. The reaction was continued until the polymerization conversion reached 95%. Then, 0.0075 parts by mass of hydroquinone was added so that the polymerization was stopped. The resulting emulsion polymerization solution was coagulated with 1.0% by mass of a magnesium sulfate aqueous solution and the coagulum was washed with water and dried to obtain an acrylic copolymer A. The acrylic copolymer was measured for Mooney viscosity and residual magnesium content as described above. The acrylic copolymer was found to have a Mooney viscosity of 35 and a residual magnesium content of 245 ppm by mass. Table 1 shows the results.

### [Production Example 2]

### (Production of acrylic copolymer B)

An acrylic copolymer B was prepared as in Production Example 1, except that the monomers for forming the acrylic copolymer and the amounts thereof in Production Example 1 were changed as follows: 10.0 parts by mass of ethyl acrylate, 58.6 parts by mass of n-butyl acrylate, 30.0 parts by mass of 2-methoxyethyl methacrylate, and 1.4 parts by mass of monoethyl fumarate. Like in Production Example 1, the Mooney viscosity and residual magnesium content of the acrylic copolymer were measured as described above. The results are shown in Table 1.

### [Production Example 3]

### (Production of acrylic copolymer C)

An acrylic copolymer C was prepared as in Production Example 1, except that the monomers for forming the acrylic copolymer and the amounts thereof in Production Example 1 were changed as follows: 75.0 parts by mass of ethyl acrylate, 15.6 parts by mass of n-butyl acrylate, 8.0 parts by mass of 2-methoxyethyl acrylate, and 1.4 parts by mass of monoethyl fumarate. Like in Production Example 1, the Mooney viscosity and residual magnesium content of the acrylic copolymer were measured as described above. The results are shown in Table 1.

### [Production Example 4]

### (Production of acrylic copolymer D)

An acrylic copolymer D was prepared as in Production Example 1, except that the monomers for forming the acrylic copolymer and the amounts thereof in Production Example 1 were changed as follows: 5.0 parts by mass of ethyl acrylate, 8.6 parts by mass of n-butyl acrylate, 85.0 parts by mass of 2-methoxyethyl acrylate, and 1.4 parts by mass of monoethyl fumarate. Like in Production Example 1, the Mooney viscosity and residual magnesium content of the acrylic copolymer were measured as described above. The results are shown in Table 1.

### [Production Example 5]

### (Production of acrylic copolymer E)

An acrylic copolymer E was prepared as in Production Example 1, except that the coagulation conditions in Production Example 1 were changed to include an aqueous solution mixture of 0.1% by mass magnesium sulfate and 8% by mass sodium sulfate. Like in Production Example 1, the Mooney viscosity and residual magnesium content of the acrylic copolymer were measured as described above. The results are shown in Table 1.

### [Production Example 6]

### (Production of acrylic copolymer F)

An acrylic copolymer F was prepared as in Production Example 1, except that the coagulation conditions in Production Example 1 were changed such that the concentration of the magnesium sulfate aqueous solution was doubled. Like in Production Example 1, the Mooney viscosity and residual magnesium content of the acrylic copolymer were measured as described above. The results are shown in Table 1.

**[Table 1]**

| | | | Production Example 1 | Production Example 2 | Production Example 3 | Production Example 4 | Production Example 5 | Production Example 6 |
|---|---|---|---|---|---|---|---|---|
| | Type of acrylic copolymer | | A | B | C | D | E | F |
| Monomer composition | Ethyl acrylate | (parts by mass) | 15 | 10 | 75 | 5 | 15 | 15 |
| | n-Butyl acrylate | (parts by mass) | 53.6 | 58.6 | 15.6 | 8.6 | 53.6 | 53.6 |
| | 2-Methoxyethyl acrylate | (parts by mass) | 30 | | 8 | 85 | 30 | 30 |
| | 2-Methoxyethyl methacrylate | (parts by mass) | | 30 | | | | |
| | Monoethyl fumarate | (parts by mass) | 1.4 | 1.4 | 1.4 | 1.4 | 1.4 | 1.4 |
| Emulsifier | Polyoxyalkylene alkyl ether phosphate | (parts by mass) | 1.7 | 1.7 | 1.7 | 1.7 | 1.7 | 1.7 |
| Water | Water | (parts by mass) | 200 | 200 | 200 | 200 | 200 | 200 |
| Reductant | Sodium ascorbate | (parts by mass) | 0.1 | 0.1 | 0.1 | 0.1 | 0.1 | 0.1 |
| Polymerization initiator | Potassium persulfate | (parts by mass) | 0.1 | 0.1 | 0.1 | 0.1 | 0.1 | 0.1 |
| Polymerization terminator | Hydroquinone | (parts by mass) | 0.0075 | 0.0075 | 0.0075 | 0.0075 | 0.0075 | 0.0075 |
| Coagulant | Magnesium sulfate | (% by mass) | 1.0 | 1.0 | 1.0 | 1.0 | 0.1 | 2.0 |
| | Sodium sulfate | (% by mass) | | | | | 8.0 | |
| Acrylic copolymer | Mooney viscosity | (M1 +4) | 35 | 42 | 36 | 29 | 35 | 35 |
| | Residual magnesium content | (ppm by mass) | 245 | 383 | 231 | 355 | 31 | 657 |

### [Pretreatment]

In an accelerated storage stability test, the acrylic copolymers A to F were subjected to heat treatment at 90°C for 15 hours in a hot-air dryer so that a thermal history was imparted to them.

### [Example 1]

An amount of 100 parts by mass of the pretreated acrylic copolymer A, 60 parts by mass of carbon black (category in ASTM D1765: N550), 2 parts by mass of stearic acid (dispersant and softener for carbon black), and 2 parts by mass of 4,4'-bis(α,α-dimethylbenzyl)diphenylamine (antioxidant) were kneaded at 120°C using a kneader. Then, 0.6 parts by mass of hexamethylenediamine carbamate (aliphatic diamine crosslinking agent) and 2 parts by mass of di-o-tolylguanidine (crosslinking accelerator) were added and the components were kneaded at room temperature using a kneading roll. Then, the resulting mixture was kneaded using a kneader and an open roll mill to obtain a sheet-shaped acrylic copolymer-containing composition having a thickness of 2 to 2.5 mm. A Mooney scorch test, a normal-state property test, and a water resistance test were performed as described above. The results are shown in Table 2.

### [Examples 2 and 3]

In each example, an acrylic copolymer-containing composition was prepared from the pretreated acrylic copolymer as in Example 1, except that the acrylic copolymer A in Example 1 was replaced by the acrylic copolymer B (Example 2) or the acrylic copolymer C (Example 3). A Mooney scorch test, a normal-state property test, and a water resistance test were performed as described above. The results are shown in Table 2.

### [Comparative Examples 1 to 3]

In each example, an acrylic copolymer-containing composition was prepared from the pretreated acrylic copolymer as in Example 1, except that the acrylic copolymer A in Example 1 was replaced by the acrylic copolymer D (Comparative Example 1), the acrylic copolymer E (Comparative Example 2), or the acrylic copolymer F (Comparative Example 3). A Mooney scorch test, a normal-state property test, and a water resistance test were performed as described above. The results are shown in Table 2.

**[Table 2]**

| | Composition | | Example 1 | Example 2 | Example 3 | Comparative Example 1 | Comparative Example 2 | Comparative Example 3 |
|---|---|---|---|---|---|---|---|---|
| Acrylic copolymer | Acrylic copolymer A | (parts by mass) | 100 | | | | | |
| | Acrylic copolymer B | (parts by mass) | | 100 | | | | |
| | Acrylic copolymer C | (parts by mass) | | | 100 | | | |
| | Acrylic copolymer D | (parts by mass) | | | | 100 | | |
| | Acrylic copolymer E | (parts by mass) | | | | | 100 | |
| | Acrylic copolymer F | (parts by mass) | | | | | | 100 |
| Carbon black | N550 | (parts by mass) | 60 | 60 | 60 | 60 | 60 | 60 |
| Dispersant/softener | Stearic acid | (parts by mass) | 2 | 2 | 2 | 2 | 2 | 2 |
| Antioxidant | 4,4'-Bis(dimethylbenzyl)diphenylamine | (parts by mass) | 2 | 2 | 2 | 2 | 2 | 2 |
| Crosslinking agent | Hexamethylenediamine carbamate | (parts by mass) | 0.6 | 0.6 | 0.6 | 0.6 | 0.6 | 0.6 |
| Crosslinking accelerator | Di-o-tolylguanidine | (parts by mass) | 2 | 2 | 2 | 2 | 2 | 2 |
| Acrylic copolymer-containing composition | Mooney scorch test | | | | | | | |
| | t5 | (min) | 3.5 | 3.4 | 4.1 | 3.1 | 1.4 | 2.7 |
| | Vm | (M) | 49 | 65 | 67 | 50 | 86 | 55 |
| Crosslinked acrylic rubber product | Normal-state properties | | | | | | | |
| | TB | (MPa) | 11.4 | 10.5 | 12.2 | 12.6 | 11.8 | 11.3 |
| | EB | (%) | 183 | 188 | 264 | 202 | 176 | 192 |
| | HS | (JIS A) | 61 | 61 | 63 | 61 | 60 | 61 |
| | Water resistance test | | | | | | | |
| | Rate of change in volume | (ΔV%) | 5 | 6 | 5 | 11 | 9 | 8 |

Table 2 shows that the crosslinked acrylic rubber products of Examples 1 to 3 produced from the respective acrylic copolymers (Production Examples 1 to 3) of the present invention had both better Mooney scorch and water resistance than those of the comparative examples and no significant decrease in storage stability was found even though a thermal history was imparted. This clarifies that the present invention can provide an acrylic copolymer capable of maintaining excellent storage stability in the uncrosslinked state even after long-term exposure to high temperatures, and a crosslinked product produced from the acrylic copolymer which maintains good normal-state properties and good water resistance.

### INDUSTRIAL APPLICABILITY

The present invention can provide an acrylic copolymer having excellent storage stability. A crosslinked rubber product produced from a composition containing this acrylic copolymer is suitable for a variety of automotive components, such as seals, hoses, vibration isolators, tubes, belts, and boots.

## Claims

1. An acrylic copolymer, comprising
5% by mass to 70% by mass of at least one structural unit derived from an alkoxyalkyl (meth)acrylate containing a C2-C8 alkoxyalkyl group,
the acrylic copolymer satisfying the following conditions (1) and (2):
(1) the acrylic copolymer has a residual divalent metal content within a range from 50 ppm by mass to 500 ppm by mass; and
(2) the acrylic copolymer comprises 0.5% by mass to 5% by mass of at least one structural unit derived from a crosslinkable monomer containing a carboxy group.

2. The acrylic copolymer according to claim 1, comprising at least one structural unit derived from an alkyl (meth)acrylate containing a C1-C8 alkyl group.

3. The acrylic copolymer according to claim 1 or 2,
wherein the crosslinkable monomer containing a carboxy group comprises an ethylenically unsaturated dicarboxylic acid monoester.

4. An acrylic copolymer-containing composition, comprising:
the acrylic copolymer according to any one of claims 1 to 3; and
a crosslinking agent.

5. A crosslinked acrylic rubber product, produced from the acrylic copolymer composition according to claim 4.
